Europäisches Patentamt

European Patent Office

Office européen des brevets

(19)

(11) Veröffentlichungsnummer: **0 291 549**
**A1**

(12) **EUROPÄISCHE PATENTANMELDUNG**

(21) Anmeldenummer: 87107306.0

(22) Anmeldetag: 19.05.87

(51) Int. Cl.⁴: **G11B 27/02 , H04H 7/00 ,**
**G11B 27/32**

(43) Veröffentlichungstag der Anmeldung:
**23.11.88 Patentblatt 88/47**

(84) Benannte Vertragsstaaten:
**BE CH DE FR GB IT LI LU NL**

(71) Anmelder: **Jellinghaus, Wolfgang**
**Auf der Wittbräucke 10**
**D-4600 Dortmund-Syburg(DE)**

(72) Erfinder: **Jellinghaus, Wolfgang**
**Auf der Wittbräucke 10**
**D-4600 Dortmund-Syburg(DE)**

(74) Vertreter: **Przytulla, F. M. et al**
**Erzbergerstr. 2**
**D-4600 Dortmund 1(DE)**

(54) **Verfahren zur zeitgerechten Steuerung der Öffnungs- und Schliessungszeitpunkte mittels eines computergesteuerten Zeitcodes.**

(57) Bei der Erstellung der Stereo-Abmischung sind nicht alle Instrumente, die in einem Musikstück vorkommen ständig aktiv. Die fehlende Toninformation auf einem Kanal bewirkt, daß nur das Rauschen der Tonquelle und der Verstärker in die Stereosumme eingehen, wodurch das Signal/Rauschverhältnis der Stereomischung verschlechtert wird. Um Qualitätseinbußen zu vermeiden, sperrt der Toningenieur manuell, mittels eines Schalters, alle Kanäle, die zur Zeit kein Tonsignal führen. Dieses handgesteuerte Verfahren ist äußerst zeitraubend und erfordert ein großes Geschick des Toningenieurs, wobei die natürliche Reaktionszeit des Bedieners eine präzise Steuerung der Kanäle verhindert.

Die Lösung des Problems liegt in einer computergesteuerten Öffnung und Schließung der Musikmischpultkanäle. In einem ersten Durchlauf des Musikstücks merkt sich der Rechner anhand des auf Band befindlichen Zeitcodes diejenigen Zeitpunkte, zu denen ein Tonsignal in einem Kanal auftritt, oder wegfällt. Unter Einbeziehung der im System vorhandenen Reaktionszeiten kann der Rechner in allen folgenden Durchgängen die Steuerung der Öffnungen bzw. Schließungen automatisch und präzise durchführen, indem die Öffnungszeitpunkte zeitlich vorverlegt, bzw. die Schließungszeitpunkte um den Betrag der Reaktionszeit zurückverlegt werden.

Die hauptsächliche Anwendung der Erfindung liegt im Bereich der professionellen und semiprofessionellen Tonstudiotechnik. Sie führt einerseits zu einer erheblichen Verringerung des Zeitaufwandes bei der Abmischung und sorgt zuzätzlich für eine Optimierung des Signal/Rauschverhältnisses im Stereo-Endmix.

## Stand der Technik/Gegenwärtige Verfahrensweise

a) Bei der Fertigung von Masterbändern, die die Originalvorlage für Schallplatten und andere Wiedergabeverfahren darstellen, werden die Musiksignale von einem mehrkanaligem analogen oder digitalen Speichergerät (Multitracktonband) einem Mischpult zugeführt, um einen zweikanaligen "Stereoendmix" zu erstellen.

Bei der Fertigung des "Stereoendmix" tritt das Problem auf, daß ein Musiksignal nicht ständig während des gesamten Musikstücks auf einem Mischpultkanal vorhanden ist, sodaß während der Pausen das Eigenrauschen des offenen Mischpultkanals störend im "Stereoendmix" in Erscheinung tritt.

b) Gegenwärtig wird das Eigenrauschen des offenen Kanals durch zwei Hilfsmittel unterdrückt:

### aa) Noise Gate

In den Mischpultkanal wird ein Rauschunterdrückungs-Verschlußsystem in den Signalweg eingefügt. Das Rausch-Verschlußsystem ("Noise Gate") ist eine elektronisch gesteuerte Vorrichtung, die das Eingehen von Signalen (=Tonereignissen) am Mischpult ständig überwacht. Geht auf dem Mischpultkanal kein Signal ein, so schließt das Rausch-Verschlußsystem den Kanal; treten Signale auf, wird der Kanal - schnellstmöglich wieder geöffnet.

Durch dieses Meßsystem ist eine vollständig präzise Öffnung und Schließung der Mischpultkanäle synchron zum jeweiligen Musiksignal aufgrund der immer noch verbleibenden Reaktionszeit der Elektronik prinzipiell nicht möglich. Das Rausch-Verschlußsystem schließt den Kanal (immer erst dann =) zu spät, wenn bereits ein Signal (kurzfristig) empfangen und aufgezeichnet wurde bzw. öffnet den Kanal mit der reaktionsmäßig bedingten Verzögerung, sodaß ein Bruchteil des Signals verloren geht.

### bb) Mute Schalter

Der "Mute-Schalter" ist ein Ein-/Ausschalter, der pro Mischpultkanal einmal vorhanden ist. Mittels dieses Mechanismusses vermag der Mischpultbediener die Kanalsteuerung per Hand vorzunehmen. Automatisierte Computer-Mischpulte speichern diese Schaltvorgänge synchron zu einem auf Band aufgeschriebenen Zeitcode.

Das handgesteuerte Verfahren ist äußerst zeitraubend und erfordert ein großes Geschick des Mischpultbedieners: Der Erfolg ist stets von der manuellen Ausführung und Fertigkeit des Betreffenden abhängig. Die naturvorgegebene Reaktionszeit des Bedieners verhindert auch hier eine präzise Steuerung der Öffnungs- bzw. Schließungszeitpunkte der Mischpultkanäle.

Beschreibung des Patentes

a) Zur Erläuterung dienen die beiden beigefügten Schaltbilder B I und B II. Im nachfolgenden Text wird zunächst lediglich auf das Schaltbild B I eingegangen; das Schaltbild B II dient lediglich zu einer ergänzenden Darstellung des Gesamtzusammenhanges.

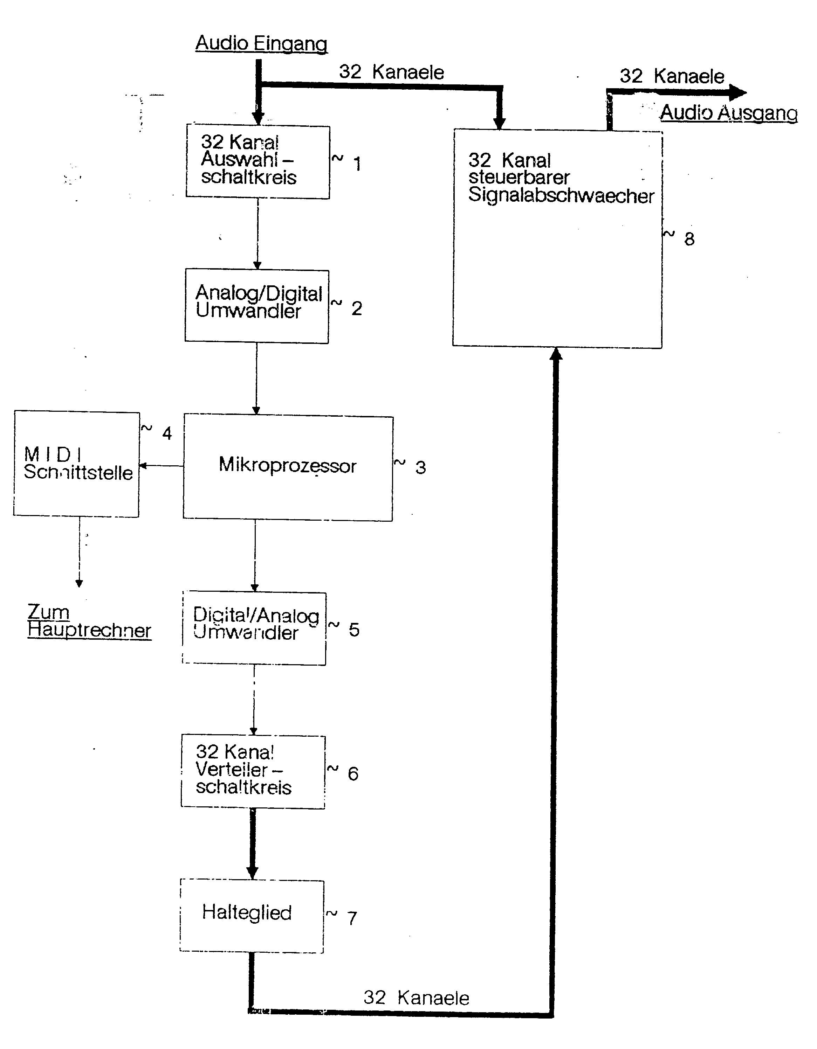

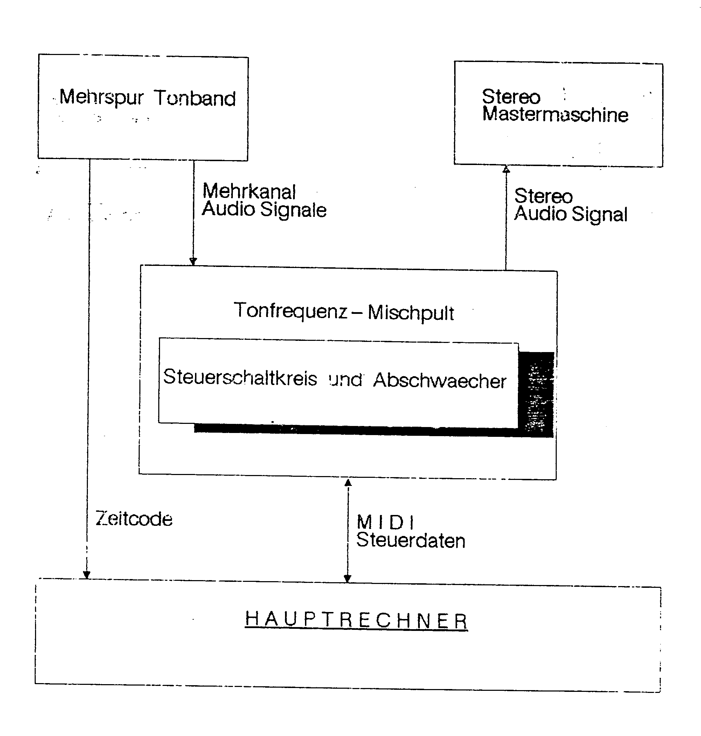

b) Das Schaltbild B I zeigt ein Blockschaltbild einer erfindungsgemäßen Ausführungsform des im Patentanspruch formulierten Verfahrens. Ein Auswahlschaltkreis (Einheit 1 in der Zeichnung) selektiert durch den Mikroprozessor jeweils intern in zeitlich kürzester Form einen von 32 möglichen Audiokanälen, da stets nur ein Musikkanal zu einem Zeitpunkt gemessen werden kann und somit in durchlaufender Folge die Messungen geschehen. Ein Analog/ Digital-Umwandler (Einheit 2 auf dem Schaltbild B I) setzt das amplituden-kontinuierliche Eingangssignal in ein wertediskretes, rechnerlesbares Digitalsignal um. Die digitalen Daten werden dem Mikroprozessor (Einheit 3) zugeführt, der die Daten im Hinblick auf das Vorhandensein eines Musiksignals interpretiert.

Dabei überprüft der Mikroprozessor das Auftreten eines Klangereignisses im jeweils ausgewählten Kanal. Ein solches Ereignis ist das Auftreten oder der Fortfall eines Musiksignals in dem gerade geprüften Kanal. Bei Auftreten eines Ereignisses teilt der Mikroprozessor diesen Vorgang einem Hauptrechner über die MIDI-Schnittstelle (Einheit 4 im Schaltbild B I) mit. Dabei wird die Nummer des Kanals, in dem das Ergebnis aufgetreten ist, sowie ein Code für das Vorhandensein bzw. Nichtvorhandensein eines Audiosignals übermittelt. Die MIDI-Schnittstelle (Einheit 4) ist eine im Bereich der Musikelektronik genormte serielle, lichtentkoppelte Vollduplex-Schnittstelle mit einer festen Übertragungsgeschwindigkeit von 31,25 kBaod.

Der Hauptrechner, bestehend aus Zentraleinheit, Bildschirm und Tastatur, speichert die vom Mikroprozessor übermittelten Daten. Zusätzlich - schreibt der Hauptrechner zu jedem Ereignis den zugehörigen Zeitpunkt des Signal-Ereignisses in seinem Speicher. Die Zeitinformation ist auf einer Spur des elektronischen Mehrkanalspeichers oder Tonbands parallel zur Musik aufgezeichnet und steht dem Hauptrechner als Zeitcode zur Verfügung. Damit hat der Rechner Kenntnis von allen Zeitpunkten, zu denen ein Musiksignal auf einem beliebigen, d.h. auch jedem Kanal auftritt oder fortfällt. Dies ist die entscheidene Voraussetzung für eine zeitgerechte, automatische Steuerung der Öffnungs- und Schließungszeitpunkte im Mischpult.

Der Hauptrechner überprüft anhand des Zeitcodes ständig, ob ein Ereignis auftritt und steuert entsprechend die Signalabschwächer (Einheit 8 im Schaltbild B I) zur code- und damit zeitgerechten Öffnung und Schließung der Kanäle im Mischpult. Hierzu übermittelt der Hauptrechner beim Erreichen eines Ereignisses die zugehörige Kanalnummer und den Ereigniscode an den Mikroprozessor (Einheit 3) über die MIDI-Schnittstelle (Einheit 4). Der Mikroprozessor gibt die Steuerinformation zum Öffnen bzw. Schließen des Mischpultkanals an einen digital-analog Umwandler (Einheit 5) weiter, der aus dem digitalen Signal eine analoge Steuerspannung erzeugt. Entsprechend der Kanalnummer wird die Steuerspannung über einen Verteilerschaltkreis (Einheit 6) einem Halteglied (Einheit 7) zugeführt. Ein derartiges Halteglied ist jedem Kanal des Mischpultes vorgeschaltet und hält die Steuerspannung an jedem Kanal fest, sodaß der Mikroprozessor (Einheit 3) in Verbindung mit dem Digital/Analog-Umwandler (Einheit 5) und dem Verteilerschaltkreis (Einheit 6) frei ist, um andere Kanäle zu bedienen. Der Impuls zur Spannungshaltung bzw. Freigabe im Halteglied wird beibehalten, bis ein neuer Impuls durch den Verteilerschaltkreis für das jeweilige Halteglied von dem Kanal ausgelöst wird.

Die Steuerspannung hinter dem Halteglied wird dem spannungsgesteuerten Signalabschwächer (Einheit 8) zugeführt. Der Signalabschwächer befindet sich in jedem der 32 Mischpultkanäle und sorgt für die Öffnung - bzw. Schließung des jeweiligen Mischpultkanals.

Der entscheidene Vorteil dieses Verfahrens gegenüber allen anderen Verfahren besteht darin, daß der Benutzer bei nochmaligem Abspielen des Bandes am Hauptrechner die Zeitpunkte, zu denen Ereignis auftritt, vorverlegen kann. Der Zeitcode wird im Hauptrechner für die richtige Aussteuerung bei nochmaligem Ablauf des ursprünglichen Bandes geringfügig auf der Zeitachse nach vorne geschoben, sodaß die Impulse dem Steuerungsband geringfügig früher erfolgen. Durch die zeitversetzte Steuerung können die Kanalöffnungen und -schließungen exakt synchron zum Musiksignal erfolgen.

## Ansprüche

Verfahren zur Verbesserung der zeitgenauen Öffnung und Schließung von Musikmischpultkanälen bei Tonfrequenzmischpulten, gekennzeichnet durch die automatische, rechnergeschützte Steuerung der Öffnungs- und Schließungszeitpunkte mittels zu einem Synchroncode zeitlich versetzter und gesteuerter Signale hin mit steuerbaren Abschwächern ausgerüsteten Mischpulten.

Audio Eingang

32 Kanaele

32 Kanaele

Audio Ausgang

32 Kanal Auswahl–schaltkreis  ~ 1

Analog/Digital Umwandler  ~ 2

32 Kanal steuerbarer Signalabschwaecher  ~ 8

MIDI Schnittstelle  ~ 4

Mikroprozessor  ~ 3

Zum Hauptrechner

Digital/Analog Umwandler  ~ 5

32 Kanal Verteiler–schaltkreis  ~ 6

Halteglied  ~ 7

32 Kanaele

Mehrspur Tonband

Stereo
Mastermaschine

Mehrkanal
Audio Signale

Stereo
Audio Signal

Tonfrequenz – Mischpult

Steuerschaltkreis und Abschwaecher

Zeitcode

M I D I
Steuerdaten

HAUPTRECHNER

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | S.M.P.T.E. Journal, Band 91, Nr. 10, Oktober 1982, Seiten 931-933, Scarsdale, New York, US; M.H. JONES et al.: "An advanced computer-assisted sound mixing system for film and video post-production" * Insgesamt * --- | 1 | G 11 B 27/02 H 04 H 7/00 G 11 B 27/32 |
| A | EP-A-0 074 841 (SONY CORP.) * Insgesamt * --- | 1 | |
| A | GB-A-2 073 994 (PARMEE ACOUSTICS COLLINS ELECTROMAGNETICS) * Insgesamt * --- | 1 | |
| A | DE-A-3 442 372 (GEORG NEUMANN GmbH) . * Insgesamt * --- | 1 | |
| A | US-A-4 067 049 (KELLY et al.) * Insgesamt * --- | 1 | |
| A | DE-A-2 004 153 (FRIED. KRUPP GmbH) * Insgesamt * --- | 1 | **RECHERCHIERTE SACHGEBIETE (Int. Cl.4)** |
| A | US-A-3 851 116 (CANNON) * Insgesamt * ----- | 1 | G 11 B H 04 H |

Der vorliegende Recherchenbericht wurde für alle Patentansprüche erstellt

| Recherchenort | Abschlußdatum der Recherche | Prüfer |
|---|---|---|
| DEN HAAG | 26-02-1988 | DAALMANS F.J. |

EPO FORM 1503 03.82 (P0403)